# EUROPÄISCHE PATENTANMELDUNG

(11) **EP 0 938 191 A2**
(43) Veröffentlichungstag der Anmeldung: **25.08.1999**
(21) Anmeldenummer: 99200407.7
(22) Anmeldetag: 11.02.1999
(51) Int. Cl.: H04B 1/58

(54) **Gabelverstärker**

(30) Priorität: 20.02.1998 DE 19807074
(71) Anmelder: Philips Patentverwaltung GmbH, 22335 Hamburg (DE); Koninklijke Philips Electronics N.V., 5621 BA Eindhoven (NL)
(72) Erfinder: Claussner, Lothar, Dipl.-Ing., 22335 Hamburg (DE)
(74) Vertreter: Schmalz, Günther, Dipl.-Ing.

(57) **Zusammenfassung**

Die Erfindung bezieht sich auf eine Schaltungsanordnung (1) zur Kopplung einer Kommunikationseinrichtung (3) mit wenigstens einem unidirektionalen Sendekanal (4) und wenigstens einem unidirektionalen Empfangskanal (5) an eine bidirektionale Kommunikationseinrichtung mit wenigstens einem Differenzverstärker (Q1, Q2). Um die Eigenschaften der Kopplung mittels einer solchen Schaltungsanordnung (1) mit möglichst einfachen Mitteln zu optimieren, wird vorgeschlagen, die Steuereingänge (C, D) des Differenzverstärkers (Q1, Q2) mit den Ausgängen eines Sendekanals (4), seine Ausgänge (A, B) mit der bidirektionalen Kommunikationseinrichtung und der Gegenkopplungszweig des Differenzverstärkers (Q1, Q2) mit einem Eingang (E) eines Empfangskanals (5) zu koppeln. Dabei ist in seinem Gegenkopplungszweig eine Anpassungsimpedanz (R4, R5, C2) zur Einstellung einer Gleichspannungs- / Gleichstromkennlinie (6) für die Schaltungsanordnung (1) bei Anschluß an die bidirektionale Kommunikationseinrichtung vorgesehen.

## Beschreibung

Die Erfindung bezieht sich auf eine Schaltungsanordnung zur Kopplung einer Kommunikationseinrichtung mit wenigstens einem unidirektionalen Sendekanal und wenigstens einem unidirektionalen Empfangskanal an eine bidirektionale Kommunikationseinrichtung mit wenigstens einem Differenzverstärker.

Mittels einer solchen Schaltungsanordnung wird insbesondere eine Gabelschaltung (Hybrid) zur Aufspaltung einer bidirektionalen Kommunikationseinrichtung (z. B. eine Zweidrahtverbindung), mit der sowohl der Sende- als auch der Empfangskanal übertragen werden, in eine Kommunikationseinrichtung mit getrenntem, unidirektionalen Sende- und Empfangskanal (z. B. eine Vierdrahtverbindung) realisiert, die gleichzeitig eine geeignete Verstärkung der entkoppelten Sende- und Empfangssignale bietet. Gabelschaltungen sind überall dort vorzusehen, wo innerhalb von Kommunikationsnetzen eine Aufspaltung der Übertragungswege notwendig ist. Beispielsweise werden im Ortsbereich von Fernsprechnetzen vor allem aus Kostengründen Zweidrahtverbindungen verwendet, wobei beide Gesprächsrichtungen über ein Leiterpaar laufen. Um bei Fernleitungen die Signale für beide Richtungen verstärken zu können, muß in eine Vierdrahtverbindung mit einem Leiterpaar für jede Übertragungsrichtung jeweils mit den entsprechenden Verstärkern aufgeteilt werden. Ebenso muß beim Anschluß eines Teilnehmerendgerätes an das Ortsnetz die Sende- und Empfangsrichtung (Mikofon und Lautsprecher) innerhalb des Gerätes getrennt werden.

Die Aufgabe der Erfindung besteht darin, eine Schaltungsanordnung der eingangs genannten Art zu schaffen, die die Eigenschaften der Kopplung mit möglichst einfachen Mitteln optimiert.

Die Aufgabe wird dadurch gelöst, daß die Steuereingänge des Differenzverstärkers mit den Ausgängen eines Sendekanals, die Ausgänge des Differenzverstärkers mit der bidirektionalen Kommunikationseinrichtung und der Gegenkopplungszweig des Differenzverstärkers mit einem Eingang eines Empfangskanals gekoppelt ist, wobei in seinem Gegenkopplungszweig eine Anpassungsimpedanz zur Einstellung einer Gleichspannungs- / Gleichstromkennlinie für die Schaltungsanordnung bei Anschluß an die bidirektionale Kommunikationseinrichtung vorgesehen ist.

Bevorzugte Ausführungsformen, die besonders vorteilhafte Ausgestaltungen der Erfindung darstellen, sind den Patentansprüchen sowie der Beschreibung der Ausführungsbeispiele zu entnehmen.

Im folgenden wird ein Ausführungsbeispiel der erfindungsgemäßen Gabelschaltung anhand von Zeichnungen näher erläutert. Dabei zeigen
- Figur 1:: ein Schaltbild eines erfindungsgemäßen Gabelverstärkers,
- Figur 2:: eine erweiterte Ausführung des erfindungsgemäßen Gabelverstärkers und
- Figur 3:: eine zugehörige Gleichspannungs- / Gleichstromkennlinie.

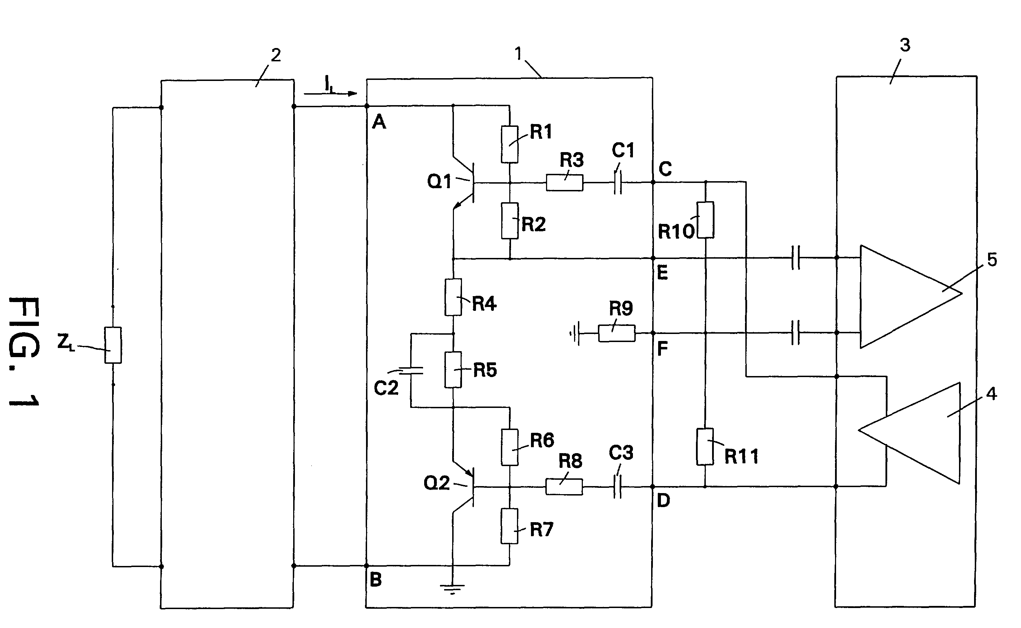

In der Figur 1 ist eine Schaltungsanordnung für einen Gabelverstärker 1 dargestellt. Der Gabelverstärker 1 ist an den Anschlüßen A und B mit einer Zweidrahtleitung (z.B. einem Ortsnetz) verbunden. Die Zweidrahtleitung wird durch eine Lastimpedanz Z_{LAST} dargestellt, die mit einer Parallelschaltung aus ohmschem Widerstand und einer Kapazität in Reihe mit einem weiteren Widerstand beschrieben werden kann. Das Ortsnetz wird von einer Spannungsversorgung 2 mit einer Gleichspannungsquelle gespeist, so daß an den Punkten AB die Spannung U_{L} anliegt und der Strom I_{L} fließt. Auf der Vierdrahtseite des Gabelverstärkers 1 ist der Eingang (Anschlüße C und D) mit einem Sendekanal 4 einer Kommunikationseinrichtung 3 (beispielsweise eine Basisbandschaltung in einem Telefonendgerät) verbunden. Der Ausgang E und F ist mit einem Empfangskanal 5 der Basisbandschaltung 3 gekoppelt.

Der Gabelverstärker 1 besteht aus einem Differenzverstärker, der die komplementären Sendesignale an den Eingängen C und D verstärkt. Der Eingang C ist über eine Trennkapazität C1 und einen Vorwiderstand R3 mit einem Basisanschluß eines Transistors Q1 verbunden. Der Basisanschluß ist noch über einen Gegenkopplungswiderstand R1 mit einem Kollektoranschluß des Transistors Q1 verbunden, der an Punkt A mit der Zweidrahtleitung gekoppelt ist. Weiterhin ist der Basisanschluß über einen Arbeitspunktwiderstand R2 mit einem Emitteranschluß des Transistors Q1 verbunden. Entsprechend liegt das komplementäre Sendesignal am Eingang D über eine Trennkapazität C3 und einen Vorwiderstand R8 an einem Basisanschluß eines Transistors Q2 an. Der Basisanschluß ist über einen Gegenkopplungswiderstand R7 mit einem Kollektoranschluß und über einen Arbeitspunktwiderstand R6 an einem Emitteranschluß gekoppelt. Der Kollektoranschluß des Transistors Q2 ist am Anschluß B, der auf Masse liegt, mit der Zweidrahtleitung gekoppelt. Der Emitteranschluß des Transistors Q1 ist über eine Anpassungsimpedanz mit dem Emitteransachluß des Transistors Q2 verbunden. Die Anpassungsimpedanz wird durch eine Schaltung aus einem Widerstand R4 in Reihe mit einer Parallelschaltung aus einem Widerstand R5 und einer Kapazität C2 gebildet.

Der Emitteranschluß des Transistors Q1 bildet den Ausgang E und ist mit einem Eingang des Empfangskanals 5 der Basisbandschaltung 3 verbunden. Ein zweiter Eingang des Empfangskanals 5 ist mit dem Ausgang F verbunden, der über einen Widerstand R9 an Masse liegt. Der Ausgang F ist noch über einen Widerstand R10 mit dem Eingang C und über einen Widerstand R11 mit dem Eingang D verbunden. Damit kann bei entsprechender Dimensionierung eine Ünterdrückung von Gleichtaktsignalen des Sendekanals 4 für den Empfangskanal 5 erreicht werden.

Zusammen mit der Dämpfung des Sendesignals gegen Masse am Anschluß E wird somit eine gute Rückhördämpfung des Gabelverstärkers 1 erzielt.

Ein an der Zweidrahtseite eingespeister Gleichstrom I_{L} führt zu folgendem Spannungsverlauf an den Anschlüßen AB. Solange die Spannung an den Widerständen R2 bzw. R6 kleiner als die notwendige Basis-Emitter-Spannung der Transistoren Q1 und Q2 ist, ergibt sich an den Anschlüßen AB eine Spannung von U_{AB} ≈ I_{L} * (R1+R2+R4+R5+R6+R7). Bei Überschreiten der notwendigen Basis-Emitter-Spannung wird die Kollektor-Emitter-Strecke der Transistoren Q1 und Q2 leitfähig, so daß sich eine Spannungsänderung von ΔU_{AB} / ΔI_{L} ≈ R4+R5 ergibt. Damit läßt sich eine geeignete Gleichspannungs-/Gleichstromkennlinie 6 für den Gabelverstärker 1 einstellen.

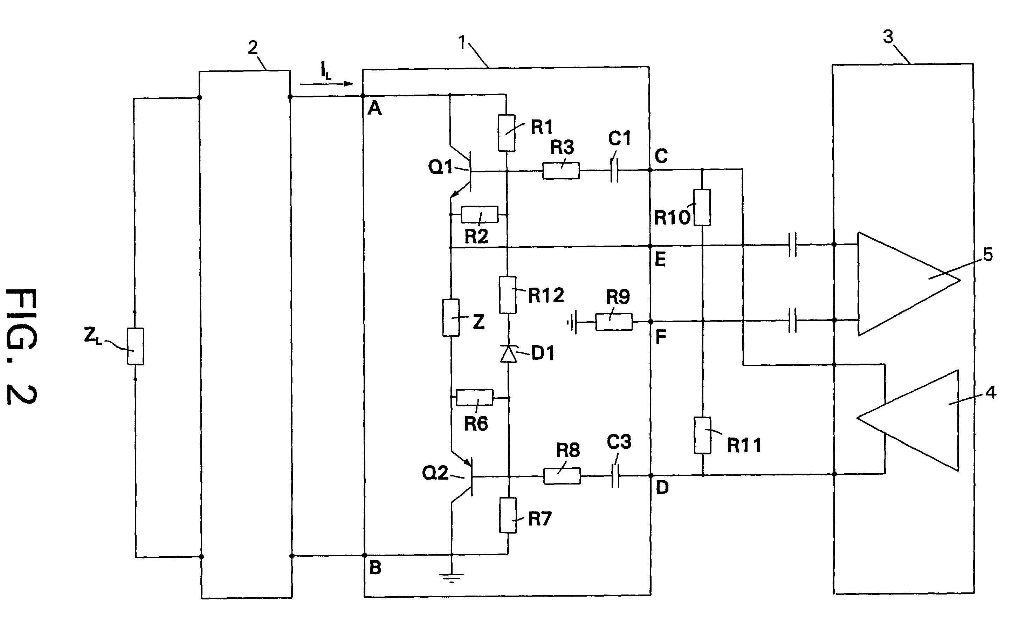

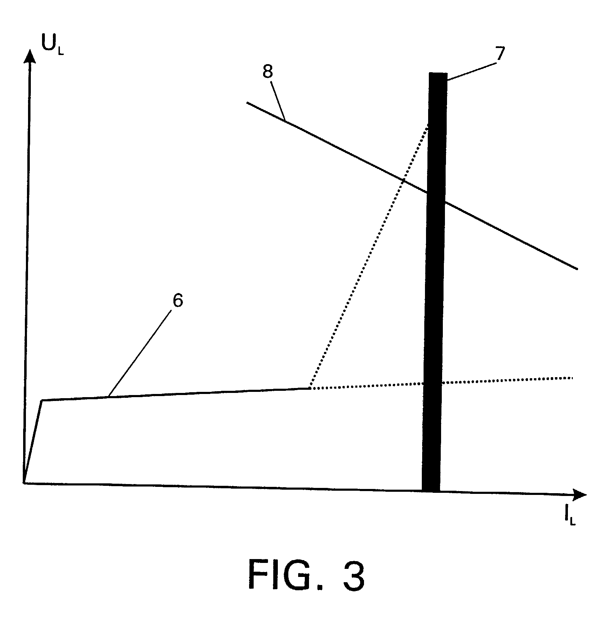

Die Gleichspannungs-/Gleichstromkennlinie 6 ist in der Figur 3 angegeben. Insbesondere sind die oben angegebenen unterschiedlichen Steigungen der Kennlinie 6 dargestellt. Eine Gleichstrombegrenzung 7 ist eingetragen, da für Kommunikationseinrichtungen oft eine maximale Strombelastung vorgeschrieben ist. Außerdem ist noch eine Spannungsversorgungskennlinie 8 eingezeichnet, die den Verlauf der von der Spannungsversorgung 2 gelieferten Gleichspannung darstellt. Wie zu sehen ist, wird bei Forderung einer flachen Steigung der Kennlinie 6 und einem kleinen maximal zulässigen Gleichstrom der Strom in der Kommunikationseinrichtung nicht vor Erreichen der Gleichstrombegrenzung 7 gemäß der Spannungsversorgungskennlinie 8 reguliert. Für diesen Fall kann in der Kennlinie 6 eine dritte Steigung realisiert werden, indem der Gabelverstärker 1, wie in der Figur 2 und zugehöriger Beschreibung dargestellt, ergänzt wird.

Zur Reflexionsdämpfung des Gabelverstärkers 1 muß die zwischen AB zu messende Wechselstromimpedanz (Apparateimpedanz) an die Leitungsimpedanz der Zweidrahtleitung angepaßt werden. Die Wechselstromimpedanz ist ein Vielfaches der Anpassungsimpedanz zwischen den Emittern von Q1 und Q2 (R5 parallel C2 in Reihe mit R4). Als Multiplikator ergibt sich etwa das Verhältnis von Gegenkopplungswiderstand (R1 bzw. R7) zu Vorwiderstand (R3 bzw. R8), wenn R1/R7 > > R3/R8 ist. Da das Widerstandsverhältnis mit einer Abweichung von maximal 10% dem Multiplikator entspricht, läßt sich durch die Dimensionierung eine Anpassung der Apparateimpedanz erreichen. Des weiteren wird durch die komplementäre Ausführung des Gabelverstärkers 1 (Q1 und Q2) das symmetrische Sendesignal an den Anschlüßen C und D der Vierdrahtleitung zum Anschluß A der Zweidrahtleitung verstärkt und gleichzeitig eine Gleichtaktunterdrückung erreicht.

In der Figur 2 ist ein weiteres Ausführungsbeispiel des erfindungsgemäßen Gabelverstärkers 1 angegeben, das der Schaltungsanordnung aus der Figur 1 im wesentlichen entspricht. Die Anpassungsimpedanz zwischen den Emittern der Transistoren Q1 und Q2 ist hier durch einen komplexen Widerstand Z dargestellt. In Ergänzung des ersten Ausführungsbeispiels sind die Basisanschlüße der Transistoren Q1 und Q2 noch über einen Widerstand R12 in Reihe mit einer Zener-Diode D1 miteinander verbunden. Dadurch wird die Gleichspannungs-/Gleichstromkennlinie 6 des Gabelverstärkers 1 derart verändert, daß die Kennlinie 6 ab einem einstellbaren Wert, wie in Figur 3 dargestellt, abknickt. Damit wird eine Beschränkung des maximal fließenden Stromes I_{L} gemäß der Spannungsversorgungskennlinie 8 erreicht. Die Gleichstrombegrenzung 7 kann damit eingehalten werden.

## Patentansprüche

1. Schaltungsanordnung (1) zur Kopplung einer Kommunikationseinrichtung (3) mit wenigstens einem unidirektionalen Sendekanal (4) und wenigstens einem unidirektionalen Empfangskanal (5) an eine bidirektionale Kommunikationseinrichtung mit wenigstens einem Differenzverstärker (Q1, Q2), dessen Steuereingänge (C, D) mit den Ausgängen eines Sendekanals (4), dessen Ausgänge (A, B) mit der bidirektionalen Kommunikationseinrichtung und dessen Gegenkopplungszweig mit einem Eingang (E) eines Empfangskanals (5) gekoppelt ist, und in dessen Gegenkopplungszweig eine Anpassungsimpedanz (R4, R5, C2) zur Einstellung einer Gleichspannungs- / Gleichstromkennlinie (6) für die Schaltungsanordnung (1) bei Anschluß an die bidirektionale Kommunikationseinrichtung vorgesehen ist.

2. Schaltungsanordnung (1) nach Anspruch 1,
dadurch gekennzeichnet,
daß wenigstens eine Reihenschaltung aus wenigstens einem Widerstand (R4) und wenigstens einer Parallelschaltung aus wenigstens einem Widerstand (R5) und einer Kapazität (C2) zur Bildung der Anpassungsimpedanz vorgesehen ist.

3. Schaltungsanordnung (1) nach Anspruch 1,
dadurch gekennzeichnet,
daß im Differenzverstärker zwei komplementär geschaltete Transistoren (Q1, Q2) zur Verstärkung eines vom Sendekanal (4) empfangenen Sendesignals bzw. komplementären Sendesignals vorgesehen sind.

4. Schaltungsanordnung (1) nach Anspruch 3,
dadurch gekennzeichnet,
daß ein Basisanschluß der Transistoren (Q1, Q2) jeweils über wenigstens eine Trennkapazität (C1, C3) und einen Vorwiderstand (R3, R8) mit dem Sendesignal bzw. komplementären Sendesignal verbunden ist,
daß ein Kollektoranschluß der Transistoren (Q1, Q2) jeweils mit einem Anschluß (A, B) der bidirektionalen Kommunikationseinrichtung verbunden ist,
daß die Emitteranschlüsse der Transistoren (Q1, Q2) über die Anpassungsimpedanz (R4, R5, C2) im Gegenkopplungszweig miteinander verbunden sind, und
daß ein Basisanschluß der Transistoren (Q1, Q2) jeweils über wenigstens einen Gegenkopplungswiderstand (R1, R7) mit einem zugehörigen Kollektoranschluß und über wenigstens einen Arbeitspunktwiderstand (R2, R6) mit einem Emitteranschluß verbunden ist.

5. Schaltungsanordnung (1) nach Anspruch 4,
dadurch gekennzeichnet,
daß eine Dimensionierung der Anpassungsimpedanz (R4, R5, C2), des Gegenkopplungswiderstandes (R1 bzw. R7) und des Vorwiderstandes (R3 bzw. R8) derart vorgesehen ist, daß die Anpassungsimpedanz (R4, R5, C2) multipliziert mit dem Verhältnis von Gegenkopplungswiderstand (R1 bzw. R7) zu Vorwiderstand (R3 bzw. R8) etwa gleich der Eigenimpedanz der gekoppelten bidirektionalen Kommunikationseinrichtung ist.

6. Schaltungsanordnung (1) nach Anspruch 4,
dadurch gekennzeichnet,
daß die Basisanschlüsse der Transistoren (Q1, Q2) noch über einen Widerstand (R12) und eine Zener-Diode (D1) gekoppelt sind.
